# EUROPEAN PATENT APPLICATION

(11) **EP 2 665 329 A1**
(43) Date of publication of application: **20.11.2013**
(21) Application number: 12360039.7
(22) Date of filing: 14.05.2012
(51) Int. Cl.: H04W 76/04

(54) **Controlling radio resource management measurements during DRX**

(71) Applicant: Alcatel Lucent, 75007 Paris (FR)
(72) Inventor: Worrall, Chandrika K., Newbury, Berkshire RG14 6SN (GB); Palat, Sudeep K., Swindon, Wiltshire SN5 6EE (GB)
(74) Representative: Sarup, David Alexander

(57) **Abstract**

A method of controlling radio resource management measurements by user equipment of a wireless telecommunications network, user equipment and a computer program product are disclosed. The method comprises: when in the at least one longer discontinuous reception state, determining whether a velocity of the user equipment exceeds a velocity threshold; and if so, causing the user equipment to perform radio resource management measurements at timings which correspond with a shorter discontinuous reception state. In this way, the user equipment is able to make radio resource management measurements at intervals which are appropriate for the velocity of the user equipment. This helps to ensure that when the user equipment is moving more quickly, the radio resource management measurements can occur at shorter timing intervals in order that sufficient radio resource management measurements are made to improve the likelihood of a handover target been identified.

## Description

### FIELD OF THE INVENTION

The present invention relates to a method of controlling radio resource management measurements by user equipment of a wireless telecommunications network, user equipment and a computer program product.

### BACKGROUND

Wireless communications networks are known. In a cellular system, radio coverage is provided to user equipment, for example mobile telephones, by geographical area. Those geographical areas of radio coverage are known as cells. A base station is located in each geographical area to provide the required radio coverage. A base station may support more than one cell providing coverage in the same geographical area. User equipment in the area served by a base station receives information and data from the base station and transmits information and data to the base station.

Information and data transmitted by the base station to the user equipment occurs on channels of radio carries known as downlink carriers. Information and data transmitted by user equipment to the base station occurs on uplink channels of radio carriers known as uplink carriers.

In known wireless telecommunications networks, user equipment can move between geographical base station coverage areas. Services provided to user equipment is typically overseen by a network node. The network node communicates with user equipment and base stations and determines which base station each user equipment is primarily connected to. Furthermore, the network node acts to control and communicate with a base station and user equipment when the user equipment moves from the geographical area served by one base station to a geographical area served by another base station or between geographical areas served by the same base station.

This movement is known as a "mobility event" or a "relocation" or a "handover" and is overseen by the network node. Typically, the extent of the involvement of the network node in such mobility events or relocations will also depend upon the current state of the user equipment. For example, relocation of user equipment when in an active state (i.e. actively supporting the communication of data between the user equipment and a source base station) involves controlling the handover from the source base station to a target base station identified by a measurement report provided by the user equipment which identifies the measured characteristics of signals received from that target base station from radio resource management measurements made by the user equipment.

In order to reduce power consumption in user equipment, it is known to cause the user equipment to transition between a continuous reception state to discontinuous reception states. During the discontinuous reception states, the user equipment reception logic is only powered during reception periods, which provides for power savings.

However, operating in discontinuous reception can impact on the user equipment's ability to make radio resource management measurements.

Accordingly, it is desired to provide an improved technique for controlling radio resource management measurements.

### SUMMARY

According to a first aspect, there is provided a method of controlling radio resource management measurements by user equipment of a wireless telecommunications network operable to support discontinuous reception having a short discontinuous reception state and at least one longer discontinuous reception state, the method comprising: when in the at least one longer discontinuous reception state, determining whether a velocity of the user equipment exceeds a velocity threshold; and if so, causing the user equipment to perform radio resource management measurements at timings which correspond with a shorter discontinuous reception state.

The first aspect recognizes that a problem with existing techniques for making radio resource management measurements is that in some circumstances insufficient radio resource management measurements may be made to help identify that a mobility event, such as a handover, is required which results in the user equipment experiencing radio link failure. In particular, current techniques require that the radio resource management measurements are made only during the on or active period of the discontinuous reception cycle. Should the user equipment be operating in a longer discontinuous reception state when the user equipment is traveling at a relatively high velocity, then it may be that insufficient radio resource management measurements are made to enable the network to handover the user equipment to another cell. In other words, when user equipment which is connected to the network and is not actively communicating with the network or the user equipment is only running background applications, the user equipment is generally configured into a longer discontinuous reception state to enable the user equipment to save power. As mentioned above, while in the discontinuous reception state, the user equipment is required to perform radio resource management measurements whilst in the active period of a discontinuous reception cycle, as specified in 3GPP TS 36.101. However, the measurements made when in a longer discontinuous reception state may not be sufficient for mobility management (such as handover to another cell, if required) for fast moving user equipment. In particular, the user equipment is required to average a number of measurement samples in order to provide its measurements in the form of a measurement report. Due to the time taken by the user equipment to make these measurement samples in order to be able to provide the radio resource management measurements to the network, the handover opportunity to another cell may have been lost prior to the measurement report being sent. This may result in handover failure which it impacts on the user equipment performance. The problem of a handover failure is seen in both homogeneous and heterogeneous network deployments. The problem is severe in the heterogeneous deployments due to the small cell size and the reduced transmission power of those small cells.

A number of different approaches are possible, but they each have their own disadvantages. The first would be to configure the user equipment to the short discontinuous reception state regardless of the velocity of the user equipment. However, this has a direct negative impact on the battery consumption of the user equipment. Another is for the network to alter the discontinuous reception state based on the velocity of the user equipment. For example, fast-moving user equipment can be configured to operate in the short discontinuous reception status, and slow-moving user equipment configured to operate in a longer discontinuous reception state. However, the network is required to determine the velocity of the user equipment in order to enable the configuration of the appropriate discontinuous reception state. While the user equipment is in the short discontinuous reception state, the network receives frequent signalling from the user equipment and, hence, it is possible to detect the velocity of the user equipment. However, the user equipment is in the long discontinuous reception state, there is no frequent signalling to the network. Similar to the problem mentioned above for measurement accuracy, the speed detection accuracy of the user equipment is in the long discontinuous reception state is also low. Hence, this solution does not provide sufficient information to the network to enable it to determine the user equipment velocity accurately. Another approach is to allow the user equipment to perform autonomous measurement. This assumes that the user equipment has the ability to determine its velocity. If the user equipment is moving quickly, the user equipment may perform measurements not only on the subframes corresponding to the active portions of the discontinuous receive cycle but also during the inactive portions of the discontinuous receive cycle. This means that the user equipment needs to wake up outside of the active part of the discontinuous receive cycle. However, in order to guarantee all user equipment perform measurements outside the active part of the discontinuous receive cycle, a new measurement performance requirement would be to be defined. Current measurement performance requirements are defined corresponding to the discontinuous receive cycle. The new measurement performance requirement not only would require standardization but could also require a change of the measurement performance concept.

Accordingly, a method of controlling radio resource management measurements by user equipment of a wireless telecommunications network is provided. The user equipment may be operable to support operating in discontinuous reception. The discontinuous reception may have a short discontinuous reception state and one or more longer discontinuous reception states. The method may comprise the step of determining or establishing, during the longer discontinuous reception state, whether a velocity of the user equipment exceeds a velocity threshold. When it is determined that the velocity exceeds the threshold, the user equipment may be configured to perform or make radio resource management measurements with timings which correspond with a shorter discontinuous reception state than the current discontinuous reception state. In this way, the user equipment is able to make radio resource management measurements at intervals which are appropriate for the velocity of the user equipment. This helps to ensure that when the user equipment is moving more quickly, the radio resource management measurements can occur at shorter timing intervals in order that sufficient radio resource management measurements are made to improve the likelihood of a handover target been identified.

In one embodiment, the step of determining comprises determining a transmission quality of transmissions from a serving cell is below a quality threshold. By including a further condition which controls the timings at which the radio resource management measurements are made, the control over when to increase the frequency of these measurements can be more carefully controlled in order to avoid making additional measurements when none may be required. In particular, by determining the transmission quality of transmissions from the serving cell, making the radio resource management measurements more frequently can be avoided unless the transmission quality indicates that handover is likely to be required. This means that irrespective of the velocity of the user equipment, the measurements will only be made at the more frequent rate when the user equipment is moving towards the perimeter of the serving cell thereby helping to both preserve power saving and provide measurements.

In one embodiment, the step of causing comprises causing the user equipment to perform radio resource management measurements in synchronisation with the shorter discontinuous reception state. Accordingly, the radio resource management measurements may occur at the same time or align with the activation of the reception logic in the short the discontinuous reception state. This means that the measurements occur at the same time as the active period of the short discontinuous reception state.

In one embodiment, the step of causing comprises causing the user equipment to operate in the shorter discontinuous reception state. Accordingly, the network may command the user equipment to transition to the shorter discontinuous reception state in order to control when the radio resource management measurements are made. In one embodiment, the step of causing comprises causing the network to instruct the user equipment to operate in the shorter discontinuous reception state. Accordingly, the network may command the user equipment to transition to the shorter discontinuous reception state in order to control when the radio resource management measurements are made.

In one embodiment, said step of causing comprises informing the network that the velocity of the user equipment exceeds the velocity threshold to cause the network to instruct the user equipment to operate in the shorter discontinuous reception state. Hence, a message may be provided to the network advising that the user equipment has exceed the velocity threshold or advising the velocity of the user equipment so that the network can determine whether the velocity threshold has been exceeded. The network may then cause the user equipment to operate in the shorter discontinuous reception state.

In one embodiment, the step of causing comprises transmitting a message to the network to cause the network to instruct the user equipment to operate in the shorter discontinuous reception state. Hence, an existing or a new message may be utilised inform the network that it needs to instruct the user equipment to transition to a shorter discontinuous reception state.

In one embodiment, the step of causing comprises transmitting a scheduling request to the network to cause the network to instruct the user equipment to operate in the shorter discontinuous reception state. The use of a scheduling request is a convenient mechanism for the user equipment to indicate to the network that the threshold conditions have be reached and it may be necessary to operate in a shorter discontinuous reception state.

In one embodiment, the step of causing comprises transmitting a scheduling request and associated buffer status report to the network to cause the network to instruct the user equipment to operate in the shorter discontinuous reception state. The combination of a scheduling request and a designated buffer status report may indicate to the network using existing signalling that it is necessary to command the user equipment to operate in a shorter discontinuous reception state in order to increase the frequency of the measurements.

In one embodiment, the step of causing comprises allowing the user equipment to continue to operate in the at least one longer discontinuous reception state whilst performing radio resource management measurements at timings which correspond with the shorter discontinuous reception state. Accordingly, rather than needing to receive a command from the network, the user equipment itself may autonomously make measurements in accordance with the shorter discontinuous reception status whilst still enabling the user equipment to continue to operate in the longer discontinuous reception state. This effectively decouples the operation of making the measurements from the operation of discontinuously receiving traffic.

In one embodiment, the radio resource management measurements are performed out of synchronisation with the shorter discontinuous reception state.

In one embodiment, the shorter discontinuous reception state is a state in which the user equipment monitors periodically for transmissions from the network and the longer discontinuous reception state is a state in which the user equipment monitors less periodically for transmissions from the network.

In one embodiment, a time period between monitoring in the shorter discontinuous reception state is a shorter discontinuous reception time interval and in the longer discontinuous reception state is a longer discontinuous reception time interval, the longer discontinuous reception time interval being larger than the shorter discontinuous reception time interval.

In one embodiment, the method comprises the step of receiving an indication of at least one of said velocity threshold and said quality threshold. Accordingly, the thresholds may be provided to the user equipment and/or updated by, typically, the network.

According to a second aspect, there is provided to user equipment operable to support discontinuous reception having a short discontinuous reception state and at least one longer discontinuous reception state, the user equipment comprising: determining logic operable, when in the at least one longer discontinuous reception state, to determine whether a velocity of the user equipment exceeds a velocity threshold and ,if so, to cause the user equipment to perform radio resource management measurements at timings which correspond with a shorter discontinuous reception state.

In one embodiment, the determining logic is operable to determine a transmission quality of transmissions from a serving cell is below a quality threshold.

In one embodiment, the determining logic is operable to cause the user equipment to perform radio resource management measurements in synchronisation with the shorter discontinuous reception state.

In one embodiment, the determining logic is operable to cause the user equipment to operate in the shorter discontinuous reception state.

In one embodiment, the determining logic is operable to cause the network to instruct the user equipment to operate in the shorter discontinuous reception state.

In one embodiment, the determining logic is operable to transmit a message to the network to inform the network that the velocity of the user equipment exceeds the velocity threshold to cause the network to instruct the user equipment to operate in the shorter discontinuous reception state.

In one embodiment, the determining logic is operable to transmit a message to the network to cause the network to instruct the user equipment to operate in the shorter discontinuous reception state.

In one embodiment, the determining logic is operable to transmit a scheduling request to the network to cause the network to instruct the user equipment to operate in the shorter discontinuous reception state.

In one embodiment, the determining logic is operable to transmit a scheduling request and associated buffer status report to the network to cause the network to instruct the user equipment to operate in the shorter discontinuous reception state.

In one embodiment, the determining logic is operable to allow the user equipment to continue to operate in the at least one longer discontinuous reception state whilst performing radio resource management measurements at timings which correspond with the shorter discontinuous reception state.

In one embodiment, the radio resource management measurements are performed out of synchronisation with the shorter discontinuous reception state.

In one embodiment, the shorter discontinuous reception state is a state in which the user equipment monitors periodically for transmissions from the network and the longer discontinuous reception state is a state in which the user equipment monitors less periodically for transmissions from the network.

In one embodiment, a time period between monitoring in the shorter discontinuous reception state is a shorter discontinuous reception time interval and in the longer discontinuous reception state is a longer discontinuous reception time interval, the longer discontinuous reception time interval being larger than the shorter discontinuous reception time interval.

In one embodiment, the user equipment comprises reception logic operable to receive an indication of at least one of said velocity threshold and said quality threshold.

According to a third aspect, there is provided a computer program product operable, when executed on a computer, to perform the method steps of the first aspect.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:

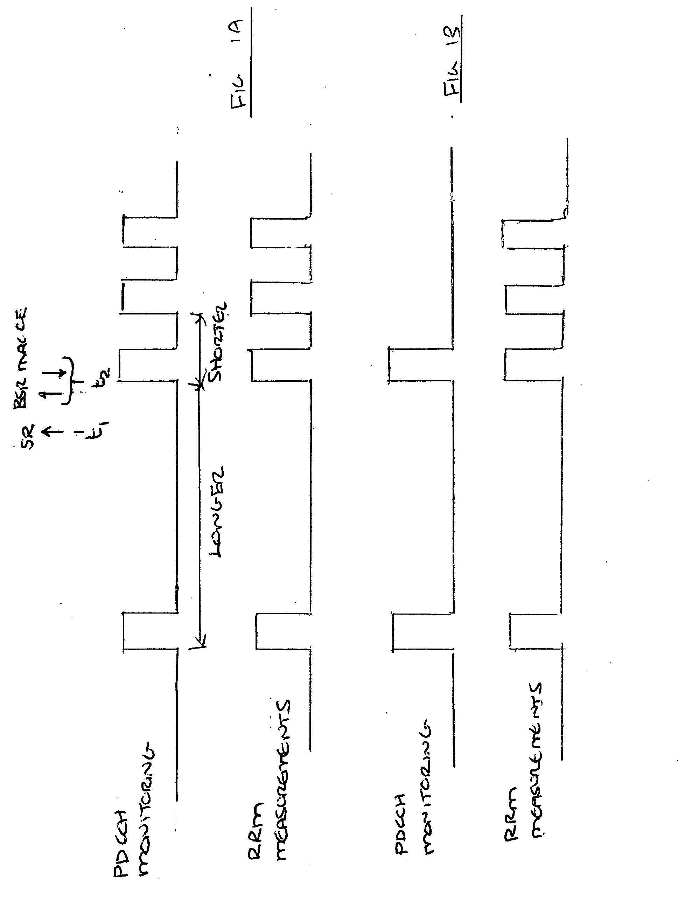

Figure 1A illustrates schematically the discontinuous reception cycles and their relationship to the radio resource management measurements according to one embodiment; and
Figure 1B illustrates schematically the discontinuous reception cycles and their relationship to the radio resource management measurements according to one embodiment.

### DESCRIPTION OF THE EMBODIMENTS

### Overview

Embodiments provide a technique which enhances the measurement accuracy based on the speed or velocity of the user equipment whilst continuing to provide power savings. This is achieved through the autonomous selection of a discontinuous cycle for making radio resource management measurements. Two main approaches are envisaged.

In a first, signalling-based approach, the network configures more than one discontinuous reception state. One of the discontinuous reception states is a shorter discontinuous reception state and one or more longer discontinuous reception states may be provided (in other words, a plurality of different longer discontinuous states may be provided). The user equipment autonomously performs an action which provides a mechanism to synchronize the discontinuous receive operation between the user equipment and the network. This autonomous action is performed based on the speed or velocity of the user equipment. The user equipment sends a scheduling request which is triggered based on the speed of the user equipment. The user equipment and transmits a buffer status report indicating an empty buffer. The combination of the scheduling request and the buffer status report indicates to the network that the user equipment wishes the network to configure the user equipment to a shorter discontinuous reception state, typically by transmitting a discontinuous receive medium access control control elements [DRX MAC CE]. Alternatively, the network does allow an inactivity timer to expire. Upon expiry of the inactivity timer, the user equipment moves to a shorter discontinuous reception state. The user equipment then performs the radio resource management measurements at the same time as the shorter discontinuous receive cycle in order that the measurements are made more frequently.

In a second, signalling-free approach, the user equipment, based on its speed or velocity makes radio resource management measurements in accordance with a shorter discontinuous receive state. However, only the measurements are made in accordance with that shorter discontinuous receive state and the downlink is only monitored for traffic in accordance with a longer discontinuous receive cycle. This effectively decouples the operation of making measurements from monitoring for transmissions. Accordingly, the user equipment continues to use a longer discontinuous receive cycle for physical downlink control channel (PDCCH) monitoring.

This approach does not require any modifications to the measurement performance requirements. As a minimum, this approach requires the new autonomous action which enables discontinuous receive synchronization between the user equipment and the network.

### Conventional Discontinuous Receive

The discontinuous receive procedure is defined for RRC_connected user equipment to enable user equipment power consumption to be reduced. The discontinuous receive behaviour is defined by the network. This behaviour is primarily controlled by a number of configurable parameters and a set of rules. The parameters of "on-duration", "inactivity-time" and "DRX cycle" are defined in 3GPP TS 36.321.

Currently, two discontinuous receive cycles are configured for user equipment. This configuration occurs using RRC signalling. When two discontinuous receive cycles are configured and discontinuous receive is activated, the user equipment activity can be described as being in one of three states: continuous reception, short discontinuous receive or long discontinuous receive. Each discontinuous receive cycle has a period where the user equipment monitors the downlink resource assignments (PDCCH) transmissions for the "on-duration". During this "on-duration" period of a discontinuous receive cycle period, the user equipment continuously receives (i.e. the user equipment is able to receive traffic at any point of the "on-duration").

If the user equipment receives downlink traffic during the "on-duration", the user equipment discontinuous state is extended by a time defined by an "inactivity-timer". Following the "on-duration" period, if there is no PDCCH scheduling during the "inactivity-time" period, the user equipment then moves to the short discontinuous receive state where the user equipment monitors the downlink during the next "on-duration" period.

The network can also order the user equipment to move immediately to short discontinuous receive when configuring discontinuous reception by transmitting to the user equipment a discontinuous reception command in a MAC control element (CE). If the user equipment receives this MAC CE, then the user equipment moves to short discontinuous receive. Transition from this short discontinuous receive state to a long discontinuous receive state is controlled by a "short discontinuous receive cycle timer" which defines a number of short discontinuous receive cycles that must occur with no traffic being received. The user equipment remains in the short discontinuous receive state for the duration defined by the short discontinuous receive cycle timer before moving to the long discontinuous receive state. If the user equipment receives downlink traffic while in the short or long discontinuous receive state, then the user equipment moves to the continuous reception state and repeats this procedure.

If uplink data arrives at the user equipment transmission buffer while the user equipment is in discontinuous receive, a scheduling request is triggered. The scheduling request is transmitted on dedicated scheduling request resources, if configured. Otherwise, the scheduling request is transmitted on the random access channel (RACH) resources. After the scheduling request is transmitted, the user equipment moves to a continuous reception state. The procedure for transition from the continuous reception state to a longer discontinuous reception state is as described above.

### Example 1- Signalling-Based Approach

As mentioned above, because measurements conventionally occur only in synchronization with the active part of the current discontinuous receive state, the measurements occur relatively infrequently when the user equipment is in one of the longer discontinuous reception states. However, these infrequent measurements may not sufficiently provide an accurate measurement when the user equipment is traveling at high speed. Accordingly, a shorter discontinuous reception cycle is required for making the measurements when moving at high speed.

A parameter "S-measure" is used to indicate whether and when the user equipment should perform radio resource management measurements. S-measure is defined as a primary cell quality threshold which controls whether or not the user equipment is required to perform measurements of intra-frequency, inter-frequency and inter-RAT neighbouring cells. A value of zero indicates that S-measure is disabled. If the serving cell Reference Signal Received Power (RSRP) is better than the S-measure, the user equipment is not required to perform intra-frequency, inter-frequency or inter-RAT measurements.

Figure 1A illustrates schematically the discontinuous reception cycles and their relationship to the radio resource management measurements. Initially, the user equipment operates in one of the longer discontinuous reception states.

At time t1, it is determined by the user equipment that it is moving quickly, above a defined threshold and the S-measure criteria is met for neighbouring cell measurements. It will be appreciated that the threshold may be received by the user equipment and/or updated typically by the network.

Accordingly, at time t2, the user equipment transmits a message to the network. In this example the user equipment initiates a scheduling request. However, it will be appreciated that only messages or signalling could be used. This takes the user equipment into a shorter discontinuous receive state. While in the shorter discontinuous receive state, the user equipment performs measurements according to the specified performance requirements; in other words the measurements are made at the same time as the active periods of the shorter discontinuous receive cycles. Hence, it can be seen that the scheduling request trigger synchronizes the discontinuous monitoring of traffic on PDCCH with the radio resource management measurements. Accordingly, the user equipment and the network are synchronized in terms of the user equipment's discontinuous receive state.

The user equipment may also transmit a buffer status report on the allocated uplink resources. Again, it will be appreciated that only messages or signalling could be used. Typically, there is no uplink data in the buffer for transmission and so a padded buffer status report is sent which indicates an empty buffer to the network. Hence, a new buffer status report trigger can be defined in the same way as the new scheduling request trigger. When the new scheduling request is triggered, the new buffer status report may also be triggered indicating an empty buffer. Upon receipt of an empty buffer status report, the network may send the user equipment to a shorter discontinuous receive state via the transmission of a DRX MAC CE. The user equipment performs the measurements whilst in the shorter discontinuous receive state and transmits the measurement reports the network.

Upon reception of the measurement reports, the network may then make its handover decision.

It will be appreciated that this approach can be used for multiple longer discontinuous reception states and the shorter discontinuous reception states may be the short discontinuous reception state or one of the other longer discontinuous reception states.

### Example 2 - Signalling-Free Approach

As shown in Figure 1B, the user equipment may be configured with two or more discontinuous reception states by the network. The user equipment initially performs measurements which are synchronized with the active periods of one of the longer discontinuous reception state when performing PDCCH monitoring.

Again, if the user equipment speed exceeds a threshold and the S-measure criteria is met for neighbouring cell measurements, the user equipment switches to performing measurements based on a configured shorter discontinuous receive cycle. However, in this example, no indication is sent to the network will stop the user equipment from continuing to perform discontinuous reception and PDCCH monitoring in accordance with the longer discontinuous reception state, even though the user equipment is making measurements based on the shorter discontinuous reception state. In other words, the operation of making the measurements is no longer synchronized with the operation of monitoring the PDCCH. Again, it will be appreciated that the threshold may be received by the user equipment and/or updated typically by the network.

This could be considered to be a combination of a short and a long discontinuous receive operation for measurements and PDCCH monitoring respectively. Moreover, this approach decouples the discontinuous receive state useful measurements from the discontinuous receive state using PDCCH monitoring.

Again, it will be appreciated that this approach can be used for multiple longer discontinuous reception states and the shorter discontinuous reception states may be the short discontinuous reception state or one of the other longer discontinuous reception states.

Accordingly, it can be seen that this approach improves measurement accuracy while the user equipment is moving at variable speeds, thereby reducing handover failure rates. This approach uses user equipment autonomous action for discontinuous reception synchronization between the user equipment and the network.

This is achieved with minimum impact on existing standards as the solution mostly reuses the currently specified procedures. This approach provides a mechanism for improved measurement accuracy of varying speed user equipment. Simply requiring a new scheduling request trigger and using existing procedures provides a very low signalling overhead and helps to improve user equipment power saving.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of controlling radio resource management measurements by user equipment of a wireless telecommunications network operable to support discontinuous reception having a short discontinuous reception state and at least one longer discontinuous reception state, said method comprising:
when in said at least one longer discontinuous reception state, determining whether a velocity of said user equipment exceeds a velocity threshold; and
if so, causing said user equipment to perform radio resource management measurements at timings which correspond with a shorter discontinuous reception state.

2. The method of claim 1, wherein said step of determining comprises determining a transmission quality of transmissions from a serving cell is below a quality threshold.

3. The method of claim 1 or 2, wherein said step of causing comprises causing said user equipment to perform radio resource management measurements in synchronisation with said shorter discontinuous reception state.

4. The method of any preceding claim, wherein said step of causing comprises causing said user equipment to operate in said shorter discontinuous reception state.

5. The method of any preceding claim, wherein said step of causing comprises causing said network to instruct said user equipment to operate in said shorter discontinuous reception state.

6. The method of any preceding claim, wherein said step of causing comprises transmitting a message to said network to cause said network to instruct said user equipment to operate in said shorter discontinuous reception state.

7. The method of any preceding claim, wherein said step of causing comprises transmitting a scheduling request to said network to cause said network to instruct said user equipment to operate in said shorter discontinuous reception state.

8. The method of any preceding claim, wherein said step of causing comprises transmitting a scheduling request and associated buffer status report to said network to cause said network to instruct said user equipment to operate in said shorter discontinuous reception state.

9. The method of any one of claims 1 to 4, wherein said step of causing comprises allowing said user equipment to continue to operate in said at least one longer discontinuous reception state whilst performing radio resource management measurements at timings which correspond with said shorter discontinuous reception state.

10. The method of claim 9, wherein said radio resource management measurements are performed out of synchronisation with said shorter discontinuous reception state.

11. The method of any preceding claim, wherein said shorter discontinuous reception state is a state in which said user equipment monitors periodically for transmissions from said network and said longer discontinuous reception state is a state in which said user equipment monitors less periodically for transmissions from said network.

12. The method of any preceding claim, wherein a time period between monitoring in said shorter discontinuous reception state is a shorter discontinuous reception time interval and in said longer discontinuous reception state is a longer discontinuous reception time interval, said longer discontinuous reception time interval being larger than said shorter discontinuous reception time interval.

13. The method of any preceding claim, comprising the step of receiving an indication of at least one of said velocity threshold and said quality threshold.

14. User equipment operable to support discontinuous reception having a short discontinuous reception state and at least one longer discontinuous reception state, said user equipment comprising:
determining logic operable, when in said at least one longer discontinuous reception state, to determine whether a velocity of said user equipment exceeds a velocity threshold and, if so, to cause said user equipment to perform radio resource management measurements at timings which correspond with a shorter discontinuous reception state.

15. A computer program product operable, when executed on a computer, to perform the method steps on any one of claims 1 to 13.
